# EUROPEAN PATENT APPLICATION

(11) **EP 2 106 116 A2**
(43) Date of publication of application: **30.09.2009**
(21) Application number: 08020977.8
(22) Date of filing: 03.12.2008
(51) Int. Cl.: H04N 1/00

(54) **Transportation device and image processing apparatus**

(30) Priority: 05.12.2007 JP 2007314233
(71) Applicant: Seiko Epson Corporation, Shinjuku-ku Tokyo 163-0811 (JP)
(72) Inventor: Yoshioka, Ichiro, Suwa-shi Nagano-ken 392-8502 (JP); Miyauchi, Hiroto, Suwa-shi Nagano-ken 392-8502 (JP); Kawahara, Manabu, Suwa-shi Nagano-ken 392-8502 (JP)
(74) Representative: HOFFMANN EITLE

(57) **Abstract**

Provided is a transportation device including: first and second tray portions which are relatively arranged in a lamination state; a first transportation opening included in the first tray portion; a second transportation opening included in the second tray portion; and a transportation path of a material to be transported, which is formed between the first transportation opening and the second transportation opening, wherein the first tray portion includes a first movable tray portion which can be displaced, the second tray portion includes a second movable tray portion which can be displaced, and the first movable tray portion and the second movable tray portion are configured to take a tray attitude of a tray configuring member for transporting the material to be transported and a housing attitude of a housing configuring member obtained by closing the first transportation opening and the second transportation opening from the tray attitude.

## Description

### BACKGROUND

### 1. Technical Field

The present invention relates to a transportation device including a first tray portion and a second tray portion which are relatively arranged in a lamination state, a first transportation opening included in the first tray portion, a second transportation opening included in the second tray portion and a transportation path of a material to be transported, which is formed between the first transportation opening and the second transportation opening, and an image processing apparatus including the transportation device.

The "image processing apparatus" includes an image reading device such as a scanner for reading image information recorded on an original which is a material to be transported, an image recording device such as a line printer or a serial printer for recording an image on the material to be transported, and various types of devices for performing predetermined image processes with respect to the material to be transported, such as a multifunction printer including the functions of the devices, a facsimile machine and a copier.

### 2. Related art

The related art of the transportation device includes, for example, a transportation device provided in a facsimile machine disclosed in JP-A-5-14593. In this transportation device, a feed tray portion for setting a material to be transported, which is transported into a housing, and an ejection tray portion for receiving the material to be transported, which is ejected from the housing, are vertically laminated. An inlet opening and an outlet opening which are respectively included in the feed tray portion and the ejection tray portion are different from each other in the vertical position, but are formed at the same position in a transportation direction of the material to be transported, that is, the both opening surfaces thereof are formed on the same plane.

The transportation device has a slide structure having a slide portion in which the feed tray portion slides in the housing. The feed tray portion is configured such that a state in which the slide portion is pulled out from the inlet opening is a usable state when the material to be transported is transported and a state in which the slide portion is thrust into the housing is an unused state when the material to be transported is not transported. In the usable state, the ejection tray portion is not structurally changed, but the length of the feed tray portion is increased by the pulled-out slide portion.

On the front end of the slide portion, a single cover member for closing the opening is rotatably mounted. The cover member is brought into contact with the inlet opening and the outlet opening when the slide portion is thrust into the housing so as to simultaneously close both the inlet opening and the outlet opening. The state in which the both openings are closed is the unused state and a foreign matter is prevented from being carelessly introduced via the both openings in the unused state. Meanwhile, when the cover member rotates in an opened direction in a state in which the slide portion is pulled out from the housing, the feed tray portion becomes the usable state.

When a user uses the transportation device, first, a first action for pulling out the slide portion from the housing and opening the both openings and a second action for opening the cover member subsequent to the first action are performed such that the device is shifted to the usable state. The material to be transported is set in the feed tray portion of which the length is increased by pulling out the slide portion, and is transported in the housing by the driving of a transportation unit (transportation roller). In the midway point of the transportation path in the housing, the material to be transported is subjected to an image process of the facsimile machine, is U-turned, and is ejected to the ejection tray portion positioned on the upper layer.

In the transportation device described in JP-A-5-14593, the usable state and the unused state are switched by the slide structure of the feed tray portion and the cover member which is openably and closably provided on the front end of the slide portion. However, in this slide structure, the structural change based on the sliding of the slide portion is large and the center of the transportation device is moved by the increased length of the slide portion. Accordingly, the structural design for stably maintaining the attitude of the pulled-out slide portion is required due to the movement of the center and thus the structure becomes complicated.

In the slide structure, a bottom surface of the slide portion functions as a placement surface of the material to be transported in the state in which the slide portion is pulled out from the housing, but is laid on the bottom surface of the housing in upper and lower layers and thus becomes an unnecessary member in the state in which the slide portion is thrust into the housing. That is, in the slide structure, waste occurs in the allotment of the roles of the components. The waste leads to the unnecessary increase in the used amount of material of the components and unnecessary increase in the total weight of the device.

In addition, the transportation device is shifted from the unused state in which both the inlet opening and the outlet opening are closed by the cover member to the usable state in which the both openings are opened, the two actions for pulling out the slide portion and opening the cover member are required. Thus, operability deteriorates.

### SUMMARY

An advantage of some aspects of the invention is that it provides a transportation device including a first tray portion and a second tray portion which are relatively arranged in a lamination state, which is capable of solving the problems of the slide structure of JP-A-5-14593, preventing the structure thereof from becoming complicated, and preventing waste from occurring in the allotment of the roles of the components in the structure in which a first transportation opening and a second transportation opening, which are respectively included in the tray portions, are opened in a usable state in which a material to be transported is transported and both the first transportation opening and the second transportation opening are closed such that a foreign matter is prevented from being carelessly introduced in an unused state in which the transportation device, and an image processing apparatus including the transportation device.

Another advantage of some aspects of the invention is that it provides a transportation device capable of performing one action when an unused state is shifted to a usable state and the unstable state is shifted to the unused state and having excellent operability, and an image processing apparatus.

According to an aspect of the invention, there is provided a transportation device including: first and second tray portions which are relatively arranged in a lamination state; a first transportation opening included in the first tray portion; a second transportation opening included in the second tray portion; and a transportation path of a material to be transported, which is formed between the first transportation opening and the second transportation opening, wherein the first tray portion includes a first movable tray portion which can be displaced, the second tray portion includes a second movable tray portion which can be displaced, and the first movable tray portion and the second movable tray portion are configured to take a tray attitude of a tray configuring member for transporting the material to be transported and a housing attitude of a housing configuring member obtained by closing the first transportation opening and the second transportation opening from the tray attitude.

According to this configuration, the first movable tray portion and the second movable tray portion are configured to take the original tray attitude of the tray configuring member for transporting the material to be transported and the housing attitude of the housing configuring member obtained by closing the first transportation opening and the second transportation opening from the tray attitude. Accordingly, when the structure in which the both openings are opened in the usable state and the both openings are closed so as to prevent a foreign matter from being carelessly introduced in the unused state is established, the structure does not become complicated like the existing slide structure. The first movable tray portion and the second movable tray portion function as the tray in the usable state and functions as the housing by closing the opening and changing the housing configuring member in the unused state. Accordingly, waste does not occur in the allotment of the roles of the components.

In the transportation device, the first movable tray portion and the second movable tray portion may be arranged such that the outer surfaces thereof are adjacent to each other in series so as to be changed to the housing configuring member.

According to this configuration, when the first movable tray portion and the second movable tray portion are displaced so as to be changed to the housing configuring member, the outer surfaces thereof are adjacent to each other in series. Accordingly, a unified appearance design can be realized with respect to the outer surfaces of the both tray portions in a state of being changed to the housing configuring member and thus the added value of the appearance can be increased. It is preferable that the outer surfaces of the both tray portions are in flush with each other.

In the transportation device, free ends of the first movable tray portion and the second movable tray portion can rotate on base ends thereof as a rotational point, and, in the housing attitude, the base end of the first movable tray portion and the free end of the second tray portion may be arranged to be adjacent to each other in series so as to be changed to the housing configuring member.

According to this configuration, when being changed to the housing configuration member by the displacement, the base end of the first movable tray portion and the free end of the second tray portion are adjacent to each other in series. That is, since the base end of the first movable tray portion and the free end of the second tray portion are adjacent to each other, the interlocking mechanism can be simplified when the second movable tray portion rotates by rotating the first movable tray portion.

In the transportation device, the first movable tray portion may rotate such that the free end thereof is inverted between a surface used in the tray attitude and a surface used in the housing attitude, and the second movable tray portion may rotate between a position of one side of the second transportation opening where the second transportation opening is opened and a position of the other side of the second transportation opening where the second transportation opening is closed in a state that the free end faces the second transportation opening such that the surface used in the tray attitude and the surface used in the housing attitude become equal to each other.

According to this configuration, the housing configuring member is obtained in the unused state of the transportation device, but the first movable tray portion is inverted by the rotation such that the tray configuring member is obtained in the usable state. Meanwhile, the second movable tray portion rotates in a small range (in a range of the opening region of the second transportation opening) in a state in which the used surface is not changed so as to be returned to the tray configuring member. Accordingly, the first movable tray portion and the second movable tray portion overlap with each other in a lamination state. Accordingly, with respect to the transportation device in which the first tray portion and the second tray portion are relatively arranged in the lamination state, when the structure in which both the first transportation opening and the second transportation opening included in the both tray portions are closed or opened so as to switch the usable state and the unused state is established, a simple structure can be achieved without waste. In addition, the material to be transported can be readily set or acquired and the operability is excellent.

The transportation device may further include an interlocking mechanism which displaces the second movable tray portion when the first movable tray portion is rotated and displaced.

According to this configuration, since the second movable tray portion is displaced by rotating and displacing the first movable tray portion, the usable state and the unused state can be switched by one action and the operability is excellent.

In the transportation device, the interlocking mechanism may include an interlocking portion in the base end of the first movable tray portion, and the interlocking portion may move the free end of the second movable tray when the first movable tray portion is rotated and displaced in a closing direction and maintain the second movable tray portion in the housing attitude at a rotation end point of the closing direction.

According to this configuration, the interlocking mechanism can be established by a simple configuration. In addition, since the tray attitude and the housing attitude are automatically switched by rotating the first movable tray portion, the operability of the user is excellent.

According to another aspect of the invention, there is provided an image processing apparatus including: a transportation device including first and second tray portions which are relatively arranged in a lamination state, a first transportation opening included in the first tray portion, a second transportation opening included in the second tray portion, and a transportation path of a material to be transported, which is formed between the first transportation opening and the second transportation opening; and an image process executing unit which is provided in the transportation path and executes an image process with respect to a material to be transported,
wherein the transportation device is the above-described transportation device.

According to this configuration, the above-described effects can be obtained as the image processing apparatus and the compact image processing apparatus which is superior in the design and the operability can be provided.

### BRIEF DESCRIPTION OF THE DRAWINGS

The invention will be described with reference to the accompanying drawings, wherein like numbers reference like elements.

Fig. 1 is a perspective view showing the appearance of a multifunction printer as an image processing apparatus in an unused state.

Fig. 2 is a perspective view showing the appearance of the multifunction printer in a usable state.

Fig. 3 is a side cross-sectional view showing a transportation device in which a first movable tray portion and a second movable tray portion are held in a housing attitude.

Fig. 4 is a side cross-sectional view showing the transportation device during when the first movable tray portion and the second movable tray portion are displaced.

Fig. 5 is a side cross-sectional view showing the transportation device in a usable state (tray attitude).

Fig. 6 is an enlarged perspective view showing the periphery of an interlocking portion during when the first movable tray portion and the second movable tray portion are displaced.

Fig. 7 is an enlarged perspective view showing the periphery of the interlocking portion during when the first movable tray portion and the second movable tray portion are in the usable state.

Fig. 8 is a perspective view showing the appearance of a multifunction printer according to another embodiment of the invention, in which the configuration of a transportation device is changed, in an unused state.

### DESCRIPTION OF EXEMPLARY EMBODIMENTS

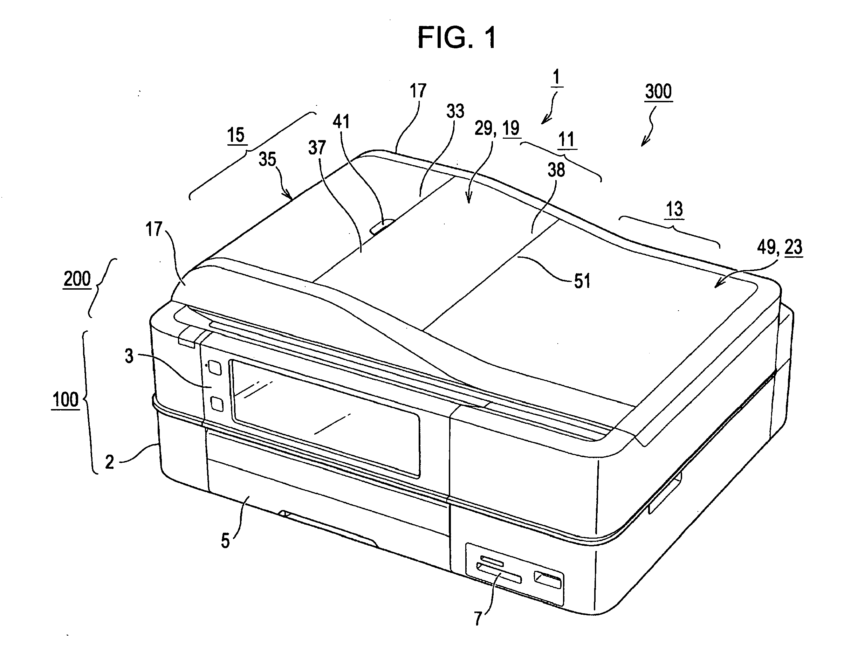

Hereinafter, a transportation device and an image processing apparatus including the transportation device according to invention will be described. Fig. 1 is a perspective view showing the appearance of a multifunction printer as an image processing apparatus in an unused state.

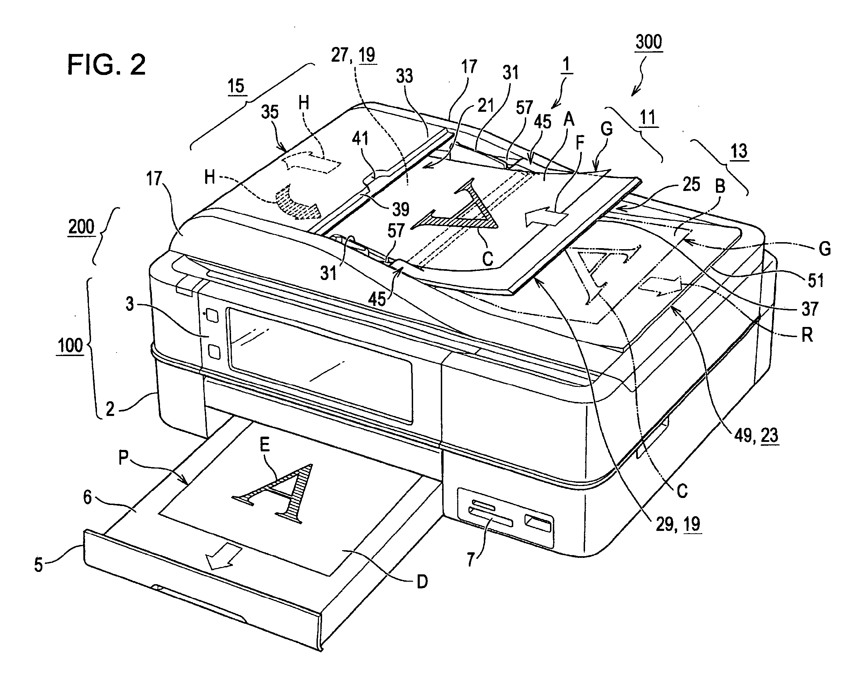

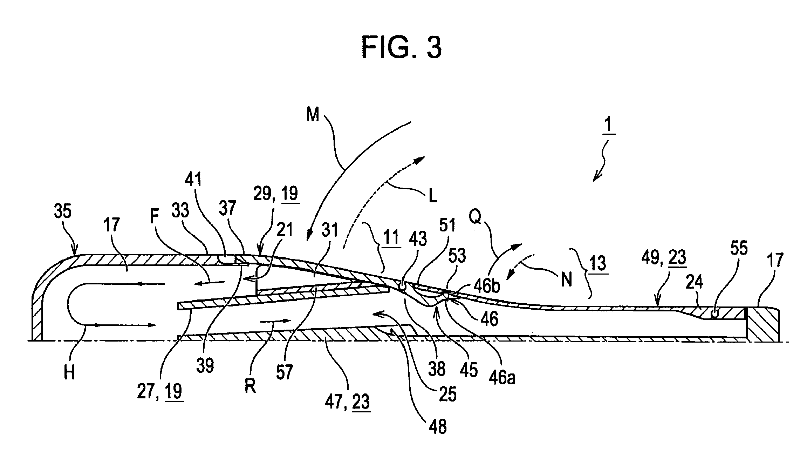

Fig. 2 is a perspective view showing the appearance of the multifunction printer in a usable state. Fig. 3 is a side cross-sectional view showing a transportation device in the unused state (in which a first movable tray portion and a second movable tray portion are held in a housing attitude).

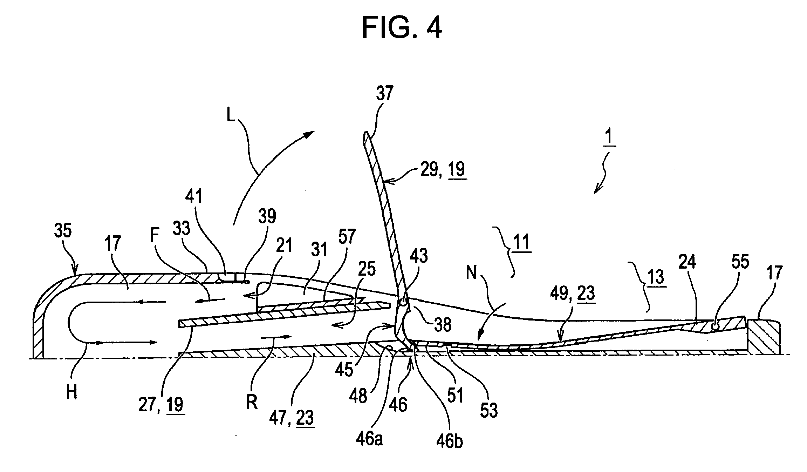

Fig. 4 is a side cross-sectional view showing the transportation device during when the first movable tray portion and the second movable tray portion are displaced.

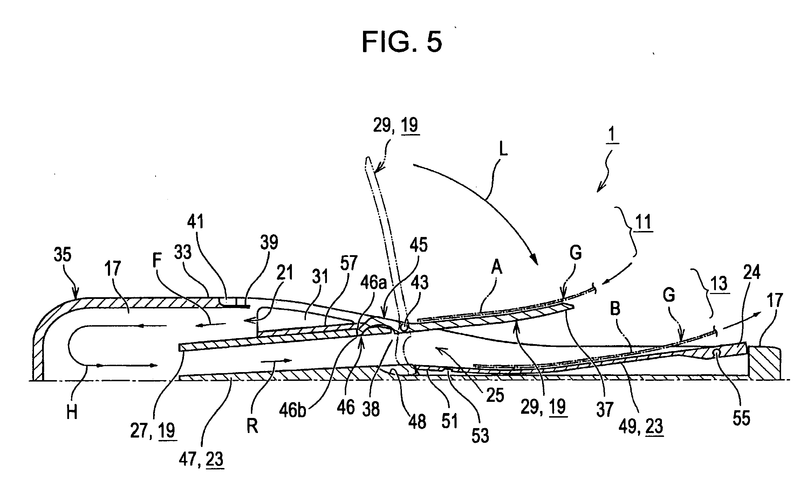

Fig. 5 is a side cross-sectional view showing the transportation device in a usable state (tray attitude).

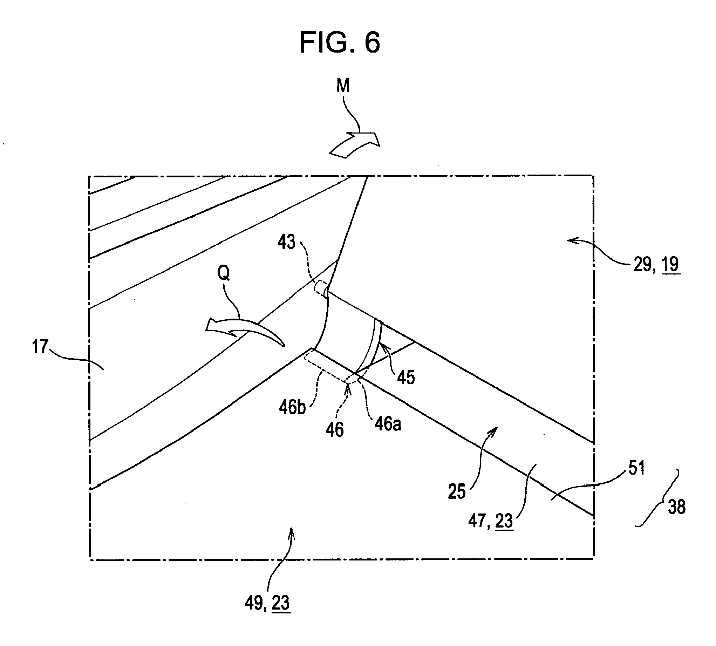

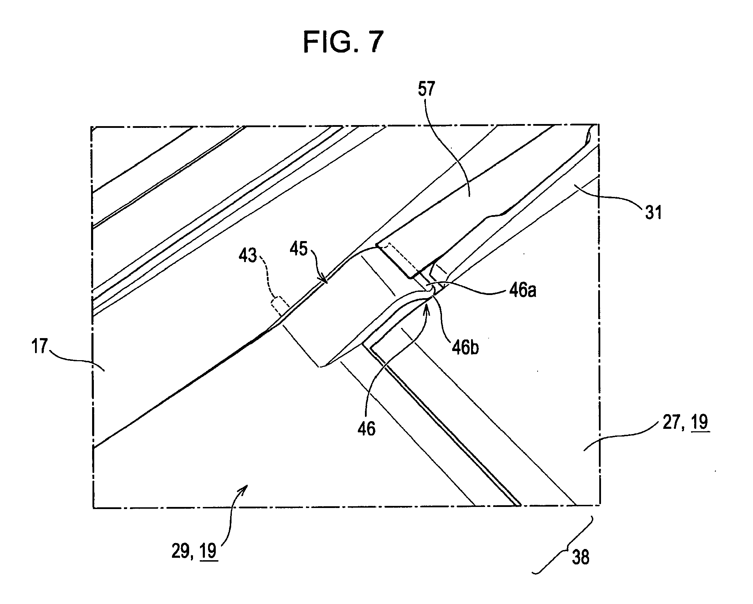

Fig. 6 is an enlarged perspective view showing the periphery of an interlocking portion during when the first movable tray portion and the second movable tray portion are displaced. Fig. 7 is an enlarged perspective view showing the periphery of the interlocking portion during when the first movable tray portion and the second movable tray portion are in the usable state.

First, the schematic whole configuration of a multifunction printer in which a scanner is mounted on an ink jet printer as an image processing apparatus according to an embodiment of the invention will be briefly described.

The multifunction printer 300 performs a function of an image reading device for reading image information C recorded on an image reading surface A of an original G and converting the image information into electronic data and a function of an image recording device for recording an image E on a surface D to be recorded of a material P to be recorded (hereinafter, also referred to as a sheet) on the basis of the converted electronic data or electronic data which is separately provided. The image recording device is an ink jet printer 100 and the image reading device is a scanner 200. The multifunction printer 300 also performs a function of a copier by executing two types of image processes.

As shown in Figs. 1 and 2, in the ink jet printer 100, an operating panel 3, an ejection stacker 5 and a memory card insertion port 7 are arranged on the front surface of a printer main body 2, and a feed cassette in which a plurality of sheets P are set in a lamination state is detachably mounted below the printer main body 2. Each of the sheets P set in the feed cassette is transported by a transportation unit (not shown) to a recording position where a record head (not shown) is provided, an image E is recorded on the surface D to be recorded of the sheet P, and the sheet is stacked on a placement surface 6 of the ejection stacker 5.

In the scanner 200, a feed portion 11 for feeding an original Q, that is, a material G to be transported, and ejection portion 13 for ejecting the material G to be transported which is positioned below the feed portion 11 are relatively arranged in the lamination state. On the left ends of the feed portion 11 and the ejection portion 13, an inversion portion 15 for connecting the feed portion 11 and the ejection portion 13 is provided. A feed tray portion 19 which is a first tray portion is provided in the feed portion 11, and a feed opening 21 which is a first transportation opening is provided between the feed tray portion 19 and a housing 17.

An ejection tray portion 23 which is a second tray portion is provided in the ejection portion 13, and an ejection opening 25 which is a second feed opening is provided between the ejection tray portion 23 and the feed tray portion 19. In the inversion portion 15, a transportation path which has a return loop shape, is denoted by an arrow H and is provided between the feed opening 21 and the ejection opening 25 and a photosensitive body unit (not shown) for irradiating light onto the material G to be transported, which is transported on the transportation path H, and directly reading image information C recorded on the image reading surface A of the material G to be transported are provided. The material G to be transported, which is set on the feed tray portion 19 with its image reading surface A facing up, is introduced from the feed opening 21 into the housing 17, is inverted by the inversion portion 15 simultaneously with the image reading process, is ejected from the ejection opening 25 to the housing 17, and is ejected on the ejection tray portion 23 in an inverted state in which its image reading surface A faces down and its rear surface B faces up.

### Embodiment

Hereinafter, a transportation device 1 of the invention which is applicable to the scanner 200 of the multifunction printer 300 will be described in detail with reference to Figs. 3 to 7.

The transportation device 1 according to the present embodiment includes the feed tray portion (first tray portion) 19, the ejection tray portion (second tray portion) 23, the feed opening (first feed opening) 21, the ejection opening (second feed opening) 25 and the transportation path H. The feed tray portion 19 includes a fixed tray portion 27 which is integrally formed with the housing 17 and a first movable tray portion 29 which can be displaced separately from the housing 17. The fixed tray portion 27 is constituted by a member having a rectangular flat plate shape and is inclined so as to become gradually lower toward a transportation direction F. On the front and rear edges of the fixed tray portion 27, a pair of edge guides 31 and 31 for regulating left and right side edges (edges) of the material G to be transported is provided so as to face each other is provided (see Fig. 2).

As shown in Figs. 3 to 5, an overhang portion 33 which is formed overhanging in the shape of eaves toward the right side is provided above the fixed tray portion 27 and becomes a portion of the housing converting the inversion portion 15. A rectangular opening which is vertically partitioned by the overhang portion 33 and the fixed tray portion 27 becomes the feed opening 21. In the front end of the overhang portion 33, a locking end 39 which is in contact with the lower surface of a rotatable free end 37 of the first movable tray portion 29 is provided. In the central portion of the locking portion 39, a concave portion 41 which is held by a finger when a portion of the first movable tray portion 29 of the feed tray portion 19 in the attitude of the unused state is opened is provided.

In the attitude of the unused state shown in Fig. 3, the first movable tray portion 29 is constituted by a rectangular plate which is slightly protruded upward. In the first movable tray portion 29, the free end 37 can rotate on a base end 38 as a first rotation point 43, but the first rotation point 43 is provided on the end of the upstream side of the transportation direction of the fixed tray portion 27. The free end 37 can rotate on the first rotation point 43 as the rotation center with respect to the housing 17, for example, in a range of about 170°.

That is, the free end 37 of the first movable tray portion 27 is inverted between the surface used in the tray attitude and the surface used in the housing attitude. In the tray attitude of the rotation end point, the fixed tray portion 27 and the first movable tray portion 29 are connected in flush with each other so as to form the upper surface of the feed tray portion 19.

On the base end 38, a scooping-up hook 45 which is an example of an interlocking portion extending to a side opposite to the free end 37 with the first rotation point 43 interposed therebetween is provided. When the first movable tray portion 29 is shifted from the attitude of the unusable state shown in Fig. 5 to the attitude of the unused state shown in Fig. 3 via the attitude during displacement shown in Fig. 4, the scooping-up hook 45 acts on the free end 51 of the second movable tray portion 49 of the ejection tray portion (second tray portion) 23 so as to scoop the free end 51 upward. In the attitude of the usable state shown in Fig. 5, the scooping-up hook 45 is brought into the lower surface of stoppers 57 which are provided outside the edge guides 31 and 31 along the edge guides and serves to set the inclination angle of the use attitude of the second movable tray portion 29.

The ejection tray portion 23 includes a fixed tray portion 47 which is integrally formed with the housing 17 and a second movable tray portion 49 which can be displaced separately from the housing 17. The upper surface of the fixed tray portion 47 is a transportation surface and is inclined so as to become gradually higher toward the transportation direction R. An escaping portion 48 which is formed in an arc shape such that the scooping-up hook 45 of the second movable tray portion 29 can smoothly rotate is formed in the end of the downstream side of the transportation direction of the fixed tray portion 47. The fixed tray portion 27 of the feed tray portion 19 is positioned above the fixed tray portion 47 such that the rectangular opening partitioned by the upper and lower fixed tray portions 27 and 47 becomes the ejection opening 25.

As shown in Figs. 3 to 5, the second movable tray portion 49 is constituted by a rectangular plate which is slightly protruded downward. In the second movable tray portion 49, a free end 51 can rotate on a base end 24 as a second rotation point 55, but the second rotation point 55 is provided in the vicinity of the right end of the housing 17. The free end 51 can rotate on the base end 24 as the rotation point 55 with respect to the housing 17, for example, in a range of about 10°.

That is, the second movable tray portion 49 rotates between the position of one side (lower side) of the ejection opening 25 where the ejection opening 25 is opened and the position of the other side (upper side) of the ejection opening 25 where the ejection opening 25 is closed in a state that the free end 51 faces the ejection opening 25 such that the surface used in the tray attitude and the surface used in the housing attitude become equal to each other. In the tray attitude of the rotation end point, the fixed tray portion 47 and the second movable tray portion 49 are connected in flush with each other so as to form the upper surface of the ejection tray portion 23.

In the lower surface of the free end 51 of the second movable tray portion 49, a locking concave portion 53 for receiving a hook 46 of the front end of the scooping-up hook 45 provided in the base end 38 of the second movable tray portion 29 is provided.

In the transportation device 1 of the present embodiment, since feed tray portion 19 and the ejection tray portion 23 are provided, when the first movable tray portion 29 of the feed tray portion 19 rotates in an enlarging direction L, the second movable tray portion 49 of the ejection tray portion 23 rotates in an enlarging direction N and the original G which is the material to be transported is set so as to be shifted to the attitude of the usable state. Meanwhile, when the first movable tray portion 29 of the feed tray portion 19 rotates in a closing direction M, the second movable tray portion 49 of the ejection tray portion 23 rotates in a closing direction Q such that the feed opening 21 and the ejection opening 25 are closed so as to be shifted to the attitude of the unused state.

In the attitude of the unused state, the first movable tray portion 29 and the second movable tray portion 49 are in the housing attitude so as to be changed to the housing configuring member, but, at this time, the outer surfaces thereof are adjacent to each other and are in flush with each other. Accordingly, a unified appearance design can be realized with respect to the outer surfaces of the both tray portions.

In the present embodiment, in the state shown in Fig. 3, in which the first movable tray portion 29 of the feed tray portion 19 and the second movable tray portion 49 of the ejection tray portion 23 are shifted to the attitude of the unused state, the outer surfaces of the first movable tray portion 29 and the second movable tray portion 49 are in flush with the housing 17 so as to form a smooth curved shape.

Next, (1) the shift to the usable state and (2) the shift to the unused state will be described with respect to the operation of the transportation device 1 having the above-described configuration.

### (1) Shift to Usable State (see Figs. 3 to 5)

The feed tray portion 19 and the ejection tray portion 23 in the unused state shown in Fig. 3 are shifted to the attitude of the usable state shown in Fig. 5. In this case, a finger is inserted into the concave portion 41 formed in the central portion of the overhang portion 33 such that the free end 37 of the first movable tray portion 29 moves upward so as to rotate in the enlarging direction L. Since the scooping-up hook 45 provided in the base end 38 of the first movable tray portion 29 moves downward by the rotation of the first movable tray portion 29, the second movable tray portion 49 of the ejection tray portion 23 rotates in the enlarging direction N (opposite direction of the enlarging direction L of the first movable tray portion 29).

When the rotation state shown in Fig. 4 is reached, the scooping-up hook 45 of the second movable tray portion 29 is introduced into the escaping portion 48 formed in the front end of the fixed tray portion 47 of the ejection tray portion 23 and the rotation is continued without being interfered with the fixed tray portion 47. Meanwhile, the rotation of the second movable tray portion 49 of the ejection tray portion 23 is stopped because the free end 51 is brought into contact with the front end of the fixed tray portion 47.

In addition, when the first movable tray portion 29 of the feed tray portion 19 rotates in the enlarging direction L, only the second movable tray portion 29 rotates and the rotation of the first movable tray portion 29 is stopped in a state in which a base surface 46a of the hook 46 of the scooping-up hook 45 is in contact with the lower surface of the stopper 57 as shown in Fig. 5. In the state shown in Fig. 5, both the feed opening 21 and the ejection opening 25 are enlarged and the fixed tray portions 27 and 47 and the first movable tray portion 29 and the second movable tray portion 49 of the feed tray portion 19 and the ejection tray portion 23 are adjacent to each other so as to become the usable attitude in which the material G to be transported can be transported.

### (2) Shift to Unused State (see Figs. 3 to 5)

The feed tray portion 19 and the ejection tray portion 23 of the attitude of the usable state shown in Fig. 5 are shifted to the attitude of the unused state shown in Fig. 3. In this case, the first movable tray portion 29 rotates in the closing direction M by the free end 37 of the first movable tray portion 29 in the enlarged state. If the rotation state shown in Fig. 4 is reached, the scooping-up hook 45 of the first movable tray portion 29 is brought into contact with the free end 51 of the first movable tray portion 49 of the ejection tray portion 23.

In addition, when the first movable tray portion 29 rotates in the closing direction M, the free end 51 of the second movable tray portion 49 is scooped up by the scooping-up hook 45 so as to move upward and the second movable tray portion 49 rotates in the closing direction Q (opposite direction of the closing direction M of the first movable tray portion 29). When the lower surface of the free end 37 of the first movable tray portion 29 is brought into contact with the locking end 39 which is formed in the front end of the overhang portion 33, the rotation of the first movable tray portion 29 is stopped.

In this state, the front end 46b of the hook 46 of the scooping-up hook 45 is introduced into the locking concave portion 53 formed in the lower surface of the free end 51 of the second movable tray portion 49 and the second movable tray portion 49 is supported from the lower side by the first movable tray portion 29. In the unused state shown in Fig. 3, the feed opening 21 is closed by the first movable tray portion 29 and the ejection opening 25 is closed by the second movable tray portion 49 and the first movable tray portion 29 and the second movable tray portion 49 are changed to the housing configuring member such that a smooth curved appearance is formed on the outer surface of the housing (Fig. 1).

### Other Embodiment

The transportation device 1 and the image processing apparatus including the transportation device 1 according to the invention have the above-described configuration and portions thereof may be changed or omitted without departing from the scope of the invention.

For example, the first tray portion which is the member of the transportation device 1 is not limited to the feed tray portion 19 of the above-described embodiment and the ejection tray portion 23 may be used. Similarly, the second tray portion is not limited to the ejection tray portion 23 and the feed tray portion 19 may be used. The number of trays is not limited to two and at least three trays may be used. For example, a plurality of ejection tray portions 23 may be provided such that the materials to be transported are separately ejected according to the types of the materials to be transported. The interlocking portion is not limited to the scooping-up hook and the known interlocking mechanism may be applied. Displacement may be realized without the interlocking mechanism.

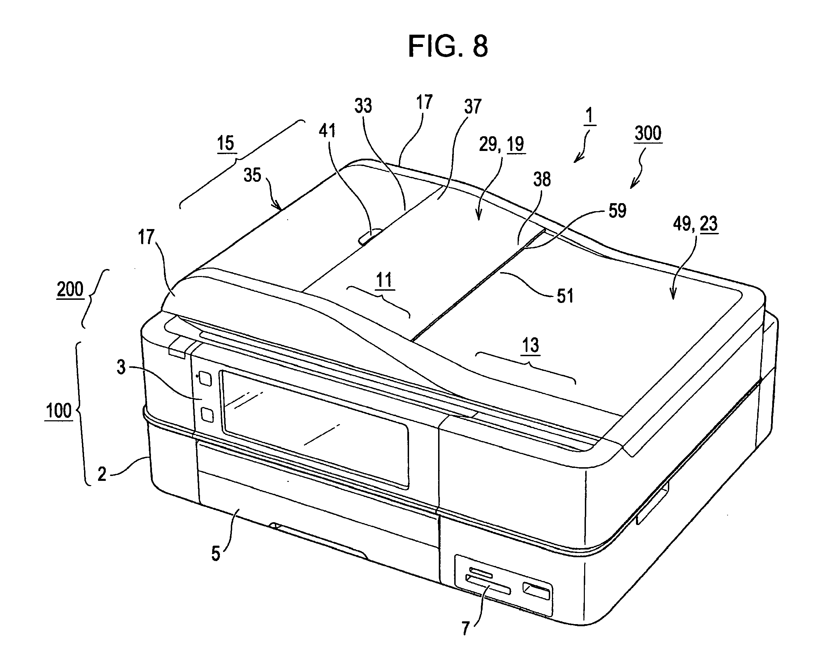

As shown in Fig. 8, when the first movable tray portion 29 and the second movable tray portion 49 are in the housing attitude of the unused state, the outer surfaces thereof may not be in flush with each other and a slight step difference 59 may be formed. The shape of the movable tray portions 29 and 49 of the first tray portion and the second tray portion is not limited to the curved plate shape and various shapes such as a flat plate shape may be employed. A damper device for preventing the careless rotation of the movable tray portions 29 and 49 during rotation or a lock device for locking the attitudes of the movable tray portions 29 and 49 may be provided. The transportation device 1 of the invention is not limited to the multifunction printer 300 and the invention is applicable to the transportation device of the scanner 200, the facsimile machine or the copier.

## Claims

1. A transportation device comprising:
first and second tray portions which are relatively arranged in a lamination state;
a first transportation opening included in the first tray portion;
a second transportation opening included in the second tray portion; and
a transportation path of a material to be transported, which is formed between the first transportation opening and the second transportation opening,
wherein the first tray portion includes a first movable tray portion which can be displaced,
the second tray portion includes a second movable tray portion which can be displaced, and
the first movable tray portion and the second movable tray portion are configured to take a tray attitude of a tray configuring member for transporting the material to be transported and a housing attitude of a housing configuring member obtained by closing the first transportation opening and the second transportation opening from the tray attitude.

2. The transportation device according to claim 1,
wherein the first movable tray portion and the second movable tray portion are arranged such that the outer surfaces thereof are adjacent to each other in series so as to be changed to the housing configuring member in the housing attitude.

3. The transportation device according to claim 2,
wherein free ends of the first movable tray portion and the second movable tray portion can rotate on base ends thereof
as a rotational point, and, in the housing attitude, the base end of the first movable tray portion and the free end of the second tray portion are arranged to be adjacent to each other in series so as to be changed to the housing configuring member.

4. The transportation device according to claim 3,
wherein:
the first movable tray portion rotates such that the free end thereof is inverted between a surface used in the tray attitude and a surface used in the housing attitude, and
the second movable tray portion rotates between a position of one side of the second transportation opening where the second transportation opening is opened and a position of the other side of the second transportation opening where the second transportation opening is closed in a state that the free end faces the second transportation opening such that the surface used in the tray attitude and the surface used in the housing attitude become equal to each other.

5. The transportation device according to claim 3 or 4, further comprising an interlocking mechanism which displaces the second movable tray portion when the first movable tray portion is rotated and displaced.

6. The transportation device according to claim 5,
wherein:
the interlocking mechanism includes an interlocking portion in the base end of the first movable tray portion, and
the interlocking portion moves the free end of the second movable tray when the first movable tray portion is rotated and displaced in a closing direction and maintains the second movable tray portion in the housing attitude at a rotation end point of the closing direction.

7. An image processing apparatus comprising:
a transportation device including first and second tray portions which are relatively arranged in a lamination state, a first transportation opening included in the first tray portion, a second transportation opening included in the second tray portion, and a transportation path of a material to be transported, which is formed between the first transportation opening and the second transportation opening; and
an image process executing unit which is provided in the transportation path and executes an image process with respect to a material to be transported,
wherein the transportation device is the transportation device according to any one of the claims 1 to 6.
